# EUROPEAN PATENT APPLICATION

(11) **EP 2 763 019 A1**
(43) Date of publication of application: **06.08.2014**
(21) Application number: 13153346.5
(22) Date of filing: 30.01.2013
(51) Int. Cl.: G06F 3/0488, G06F 3/0354, G06F 3/041

(54) **Stylus based object modification on a touch-sensitive display**

(71) Applicant: BlackBerry Limited, Waterloo, ON N2K 0A7 (CA)
(72) Inventor: Mankowski, Peter, Waterloo, Ontario N2L 3W8 (CA); Mercea, Cornel, Waterloo, Ontario N2L 3W8 (CA); Zawada, Krysztof, Rolling Meadows, Illinois 60008 (US)
(74) Representative: Noble, Nicholas

(57) **Abstract**

A stylus is used to modify the appearance of objects rendered on a touch-sensitive display.

One of a plurality of objects on the display is selected by making contacting the object with the stylus. The stylus tilt and stylus contact pressure are determined. The appearance of the selected object is modified in response to the stylus tilt of the stylus and the stylus contact pressure.

## Description

### FIELD OF THE DISCLOSURE

The present disclosure generally relates to electronic devices with touch-sensitive displays and the control of such electronic devices using a stylus.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

A touch-sensitive display, also known as a touchscreen display, is particularly useful on handheld devices including PDAs, smart phones and tablets, for example, which are small and have limited space for user input and output. The information rendered on the touch-sensitive displays may be rendered and modified with a stylus depending on the functions and operations being performed.

Improvements in electronic devices with touch-sensitive displays are desirable.

### BRIEF DESCRIPTION OF THE DRAWINGS

The accompanying figures in which like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 shows a block diagram of an apparatus for modifying an appearance of an object rendered on the apparatus.

FIG. 2 shows a block diagram of a stylus.

FIG. 3 shows a flow diagram of a method for modifying an object rendered on a touch-sensitive display in response to a stylus.

FIG. 4 shows an example of the displaying of objects at various locations for modification with a stylus.

FIG. 5 shows two examples of object modification in response to stylus tilt.

FIG. 6 shows two examples of object modification in response to stylus pressure.

FIG. 7 shows multiple examples of object modification in response to stylus tilt and stylus pressure.

### DETAILED DESCRIPTION

While detailed embodiments are disclosed herein, it is to be understood that the disclosed embodiments are merely examples and that the devices, systems and methods described herein can be embodied in various forms. Therefore, specific structural and functional details disclosed herein are not to be interpreted as limiting, but merely as a basis for the claims and as a representative basis for teaching one of ordinary skill in the art to variously employ the disclosed subject matter in virtually any appropriately detailed structure and function. Further, the terms and phrases used herein are not intended to be limiting, but rather, to provide an understandable description. Additionally, unless otherwise specifically expressed or clearly understood from the context of use, a term as used herein describes the singular or the plural of that term.

In one aspect, there is provided a method for modifying an object rendered on a touch-sensitive display in response to a stylus input comprising: determining a contact location of the stylus upon the touch-sensitive display; determining a location of a selected object of a plurality of objects rendered on the touch-sensitive display to correspond to the contact location; determining a stylus tilt relative to the touch-sensitive display; and modifying an at least one appearance characteristic of the selected object in response to the stylus tilt.

In another aspect, there is provided a method for modifying an object rendered on a touch-sensitive display in response to a stylus input comprising: determining a contact location of the stylus upon the touch-sensitive display; determining a location of a selected object of a plurality of objects rendered on the touch-sensitive display to correspond to the contact location; determining a stylus contact pressure of the stylus making contact with the touch-sensitive display; and modifying an at least one appearance characteristic of the selected object in response to the stylus contact pressure.

In another aspect, there is provided an apparatus for modifying an appearance of an object rendered on the apparatus comprising: a display for rendering a plurality of objects; a stylus sensor for determining a contact location of a stylus upon the display; a user interface module for rendering each of the plurality of objects in a corresponding plurality of locations on the display and for determining a location of a selected object of the plurality of objects, the location of the selected object corresponding to the contact location; the stylus sensor further for determining a stylus tilt of the stylus relative to the display; and the user interface module further for modifying an at least one appearance characteristic of the selected object in response to the stylus tilt.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of a portable electronic device includes a Personal Information Manager (PIM), Personal Digital Assistant (PDA), a pager, a mobile phone, a cellular phone, a smart-phone, a super-phone, a tablet computer, a laptop, and a Personal Computer (PC). The portable electronic device may also be a portable electronic device without wireless communication capabilities, such as a handheld electronic game device, digital photograph album, digital camera, or other device.

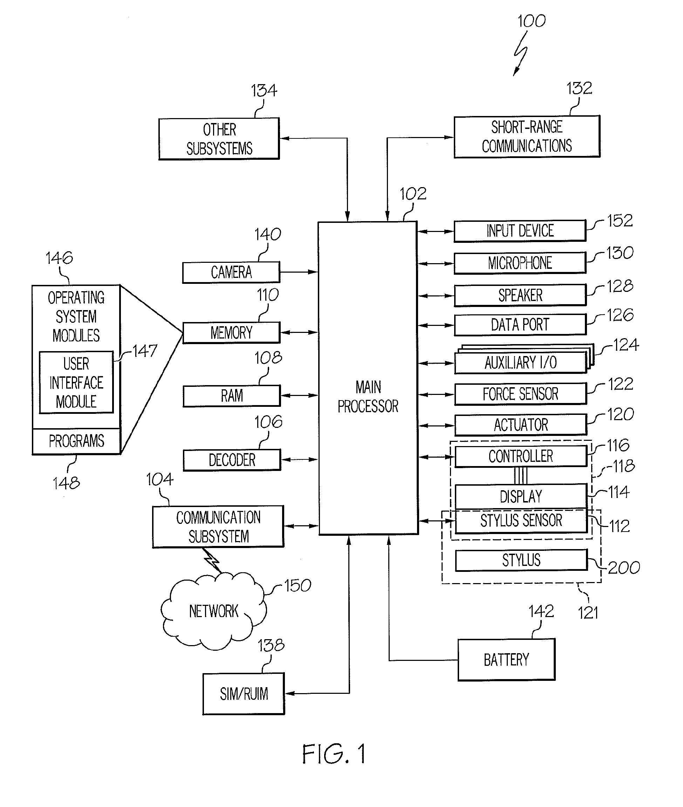

FIG. 1 shows a block diagram an apparatus for modifying an appearance of an object rendered on the apparatus. The portable electronic device **100** includes multiple components, such as a processor **102** that controls the overall operation of the portable electronic device **100.** Communication functions, including data and voice communications, are performed through a communication subsystem **104.** Data received by the portable electronic device **100** is decompressed and decrypted by a decoder **106.** The communication subsystem **104** receives messages from and sends messages to a wireless network **150.** The wireless network **150** may be any type of wireless network, including, but not limited to, data wireless networks, voice wireless networks, and networks that support both voice and data communications. Battery **142,** includes one or more rechargeable batteries or a port to an external power supply for powering the portable electronic device **100.**

The processor **102** interacts with other components, such as Random Access Memory (RAM) **108** and memory **110.** The processor **102** also interacts a display **114,** a stylus sensor **112** including a touch-sensitive overlay operably connected to an controller 116 that together comprise a touch-sensitive display **118.** The processor **102** also interacts an auxiliary input/output (I/O) subsystem **124,** a data port **126,** a speaker **128,** a microphone **130,** short-range communications **132,** and device subsystem **134** which may include other device subsystems. Stylus sensor **112** and stylus **200** form a stylus sensor system **121** which is also able to interface with the touch-sensitive overlay of the stylus sensor **112.** The processor **102** may optionally interact with one or more actuators **120** to provide tactile feedback and one or more force sensors **122** to detect a force imparted on the touch-sensitive display **118.** Interaction with a graphical user interface is performed through the stylus sensor **112.** The processor **102** interacts with the stylus sensor **112** via the controller 116. Information, such as objects including text, characters, symbols, images, icons, and other items that may be displayed or rendered on a portable electronic device, is rendered on the touch-sensitive display **118** via the processor **102.** The processor **102** may interact with an orientation sensor **136** such as an accelerometer that may be utilized to detect direction of gravitational forces or gravity-induced reaction forces. The processor **102** may interact with camera module **140** which may include one or more forward and/or rear facing cameras for photography, video conferencing or for optical recognition of gestures and objects such, as a stylus, for user interface operations.

To identify a subscriber for network access, the portable electronic device **100** uses a Subscriber Identity Module or a Removable User Identity Module (SIM/RUIM) card **138** for communication with a network, such as the wireless network **150.** Alternatively, user identification information may be programmed into memory **110.**

The portable electronic device **100** includes an operating system **146** including instructions for implementing at least portions of the user interface module **147,** and software components or programs **148** that are executed by the processor **102** and are typically stored in a persistent, updatable store such as the memory **110.** Memory **110** receives content from a computer readable medium comprising computer instructions executable on at least one processing unit. Additional applications or programs may be loaded onto the portable electronic device **100** through the wireless network **150,** the auxiliary I/O subsystem **124,** the data port **126,** the short-range communications subsystem **132,** or any other suitable subsystem **134.**

A received signal such as a text message, an e-mail message, or web page download is processed by the communication subsystem **104** and input to the processor **102.** The processor **102** processes the received signal for output to the display **114** and/or to the auxiliary I/O subsystem **124.** A subscriber may generate data items, for example e-mail messages, which may be transmitted over the wireless network **150** through the communication subsystem **104.** For voice communications, the overall operation of the portable electronic device **100** is similar. The speaker **128** outputs audible information converted from electrical signals, and the microphone **130** converts audible information into electrical signals for processing.

The touch-sensitive display **118** may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay within stylus sensor **112.** The stylus sensor **112** may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

In one implementation, stylus sensor **112** employs touch-sensitive display **118** having a planar upper surface for supporting work sheets, e.g., rendered objects including drawings, charts, maps or the like. The touch-sensitive display **118** also has a generally planar grid of conductors underneath the work surface.

The conductor grid is composed typically of a plurality of straight, parallel, usually equi-spaced conductors extending in a horizontal or x-direction, and a plurality of straight, parallel, usually equi-spaced conductors extending in a vertical or y-direction. The stylus typically has an elongated, cylindrical body terminating in a conical tip. Near the tip, the stylus contains an antenna or an electrical coil disposed concentrically with the central axis of the stylus body.

Determination of stylus location and angle of tilt is known to those familiar with the art. In one implementation, the stylus **200** wirelessly transmits electrical signals received by the grid conductors, using the RF module for transmitting signals from the stylus to the stylus sensor. Then, the grid conductors are scanned by detection circuitry to yield a series of voltage waveforms of various amplitudes corresponding to the location of the conductors with respect to the stylus. The voltage waveforms obtained from the conductors are analyzed to obtain a calculation of the position of the stylus tip on the upper surface of touch-sensitive display **118.** The stylus tilt of the stylus **200** may also be determined with further waveform analysis. The voltage waveform typically has a pair of spaced characteristic peaks whose magnitudes correspond to pen tilt. In one implementation, the stylus tilt of the stylus can be determined by analyzing either the peaks or the magnitudes of the waveform at "points" (i.e., voltages corresponding to specific conductors, or, simply stated, conductor voltages) at fixed distances on either side of the apparent pen position, and inside the waveform peaks. The antenna or coil at the tip of the stylus may further have an asymmetrical wireless radiation pattern to help facilitate determination of the stylus tilt.

Furthermore, the stylus **200** may also sense the stylus contact pressure exerted by the user of the stylus when using the stylus to contact the touch-sensitive display and then transmit a stylus pressure signal included within its transmitted signals. The stylus may also have at least one button activated by a button press by the user and the status of the button may also be included within the transmitted signals.

One or more touches, also known as touch contacts or touch events, may be detected by the touch-sensitive display **118.** The processor **102** may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display **118.** For example, the x location component may be determined by a signal generated from one touch sensor, and the y location component may be determined by a signal generated from another touch sensor. A signal is provided to the controller **116** in response to detection of a touch. A touch may be detected from any suitable object, such as a stylus, finger, thumb, appendage, or other items, depending on the nature of the touch-sensitive display **118.** Multiple simultaneous touches may be detected.

The touch-sensitive display **118** is also configured to detect a gesture. A gesture, such as a swipe, is a type of touch that begins at an origin point and continues to a finishing point while touch contact is maintained. A swipe may be long or short in distance, or duration, or both distance and duration. Two points of the swipe may be utilized to determine a vector that describes a direction of the swipe. The duration of the swipe may be determined from the origin point and finishing point of the swipe in time. The processor **102** receives data from the controller **116** to determine the direction, magnitude, and duration of the swipe. The gesture may be tracked and a plurality of sub-vectors determined for each gesture. The final sub-vector may be utilized to determine a distance and duration of a final portion of the gesture. The processor **102** receives data from the controller **116** to determine the speed of the swipe based on the distance and duration of the final portion of the gesture.

Actuators **120** may be disposed beneath the touch-sensitive display **118** and may be depressed or activated by applying force to overcome the actuation force of the actuator **120.** The actuators **120** may provide input to the processor **102** when actuated. Actuation of the actuator(s) **120** may result in provision of tactile feedback. Force sensors **122** may work in combination with the actuators to measure an applied force. Force generally refers to force measurements, estimates, and/or calculations, such as pressure, deformation, stress, strain, force density, force-area relationships, thrust, torque, and other effects that include force or related quantities.

Those familiar with the art will appreciate that there are numerous ways to determine stylus location, tilt and pressure that realize the function of stylus sensor system **121.** For example, stylus location and tilt can be determined by optical triangulation with a pair of cameras monitoring one or more fiducials of the stylus, or sonic, ultrasonic audio or radio frequency triangulation using time-of-flight signaling and triangulation. These approaches can be performed with active or passive stylus. Stylus pressure can be sensed in a number of ways including the use of force sensor **122.** The stylus tilt of the stylus may also be determined by an accelerometer or gyro included within the stylus. Further, the tilt of the touch-sensitive display can be determined with an accelerometer or gyro associated with the touch screen display. The stylus tilt of the stylus relative to the touch-sensitive display can be calculated by comparing the stylus and touch-sensitive display tilt angles.

FIG. 1 shows an apparatus or portable electronic device **100** for modifying an appearance of an object rendered on the apparatus comprising: a display **114** for rendering a plurality of objects; a stylus sensor system **121** including a stylus **200** and a stylus sensor **112** for determining a contact location of the stylus upon the display; a user interface module **147** for rendering each of the plurality of objects in a corresponding plurality of rendered locations on the display and for determining a location of a selected object of the plurality of objects, the selected object have a rendered location correspond to the contact location of the stylus upon the display; the stylus sensor system further for determining a stylus tilt of the stylus relative to the display; and the user interface module further for modifying an at least one appearance characteristic of the selected object in response to the stylus tilt.

Furthermore, the apparatus of FIG. 1 may be a multiple component portable device with all elements of FIG. 1, but for stylus **200,** assembled into a first component and the stylus 200 assembled into a second component detachably removable from the first component.

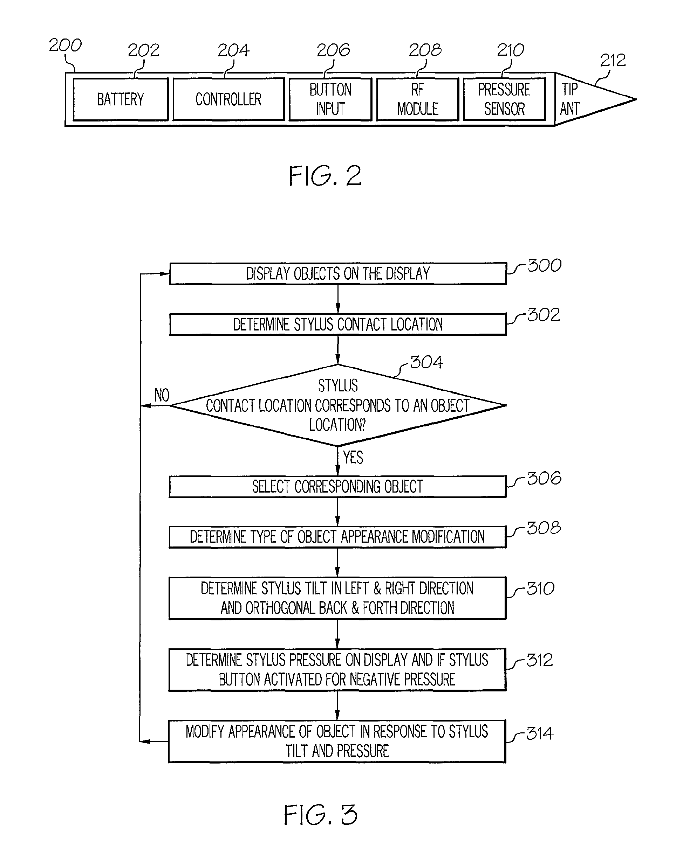

FIG. 2 shows a block diagram of a stylus. The stylus **200** has a battery **202** for powering the operation of the stylus. In another alternative, the stylus may be powered by inductive coupling included in the stylus sensor system **121** in place of or as a complement to the battery. Controller **204** monitors the button input **206,** which may include one or more buttons operable by a user, and the pressure sensor **210** to control the operation of the RF module **208.** When a slight pressure on the tip **212** of the stylus is detected, the controller powers on the RF module which transmits RF signals trough an antenna at least partially included at tip **212.** The RF signals allow for determination of stylus contact location on the touch-sensitive display **118** as well as a stylus tilt of the stylus relative to the touch-sensitive display. Within the RF signals, the controller can include additional signals for processing by user interface module **147** including a signal indicative of contact pressure sensed by pressure sensor **210,** the status of the button input **206** as well as a charge status of battery **202.**

FIG. 3 shows a flow diagram of a method for modifying an object rendered on a touch-sensitive display in response to a stylus. In step **300** objects are rendered on the display. Objects are rendered by the user interface module **147** operating either with processes of the operating system **146** or other programs **148.**

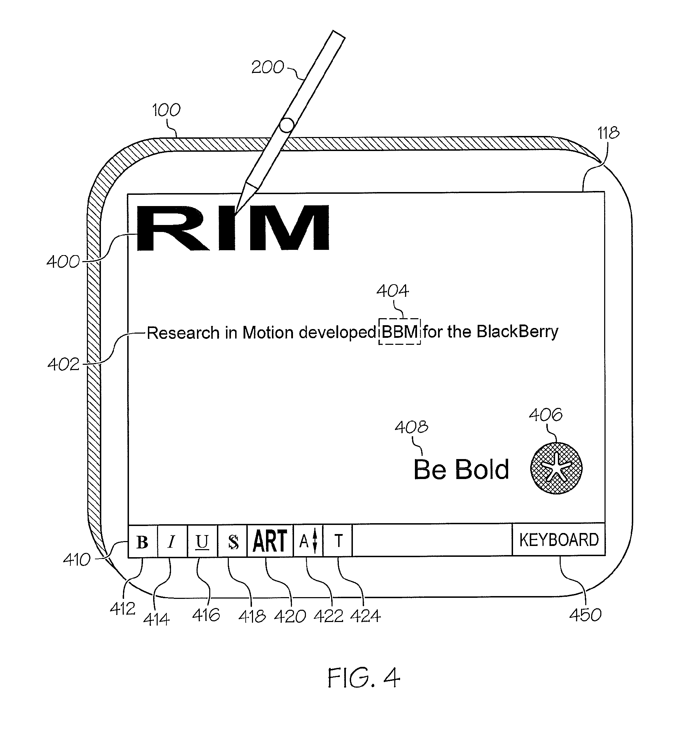

FIG. 4 shows an example of the displaying of objects at various locations for modification with a stylus. Portable electronic device **100** displays objects on touch-sensitive display **118.** Object **400** includes the letters "RIM" located in the upper left portion of touch-sensitive display **118.** Object **402** includes the text "Research in Motion developed BBM for the BlackBerry." Object **404** includes the letters "BBM" and is located within the Object **402.** Object **406** is a circular icon. Object **408** is the text "Be Bold". In this example, the objects of FIG. 4 are rendered at step **300** of FIG. 3. The objects of FIG. 4 may be created on portable electronic device **100** by any of a number of installed program applications for creating content including word processing, drawing, presentation creation applications including applications bundled in a Microsoft Office application suite. Also, the objects may be stored on the electronic device or received over the network.

Next step **302** of FIG. 3 determines the stylus contact location on the touch-sensitive display. FIG. 4 shows that stylus **200** has a contact location corresponding to the upper left portion of touch-sensitive display **118.** Step **304** determines if the stylus contact location corresponds to an object location. If not, the stylus is not being used for object modification and step **300** is returned to. In the case of stylus modification, FIG, 4 shows both the stylus contact location and location of object **400** to be in correspondence, they are both in the upper left portion of the touch-sensitive display **118.** Thus the stylus **200** is making contact at a location corresponding to the location of the display of object **400,** the letters "RIM" and step **306** selects the corresponding object **400** for modification.

If the electronic device of FIG. 4 was executing a presentation application program, such as Microsoft PowerPoint, then the examples of FIG. 4 - FIG. 7 show one implementation of object modification. Tool bar **410** shows a representative example of a tool bar. An actual toolbar could have significantly more or different icons and corresponding tools. Object **400** could have been created by selecting the "ART" tool **420** for the creation of "word art" and then selecting a location in the upper left area of the touch-sensitive display, selecting keyboard icon **450** and entering the three letters A - R-T on a resulting pop-up keyboard rendered on touch-sensitive display **118.** In another implementation there may be a physical keyboard. Object **402** and object **408** can be created in a similar way but with selection of the text generation "T" tool **424** for entering text instead of the "ART" tool **240.** Object **406** could be copied from clip art or another application such as a web browser and pasted into its current location. Other tools in toolbar for modifying objects include the character weight "B" tool **412,** the object slope "I" tool **414,** the character underline "U" tool **416,** the object shadow "S" tool **418** and the object size "A" tool **422.** Step **308** determines the type of object appearance modification is to be performed on the selected object. In this example this is done by determining which of the icons of toolbar **410** are selected.

Then, step **310** of FIG. 3 determines the stylus tilt. Stylus tilt can be determined to have components in either or both of two orthogonal directions. In this example a first orthogonal direction has a left and right orientation and the second orthogonal direction has a backward and forward orientation. Other embodiments can choose to use other directions in other orientations for object modification. Then step **312** determines stylus pressure and if a stylus button is activated. It will be appreciated that both stylus tilt and pressure are variable and that the press of a button on the stylus can be used to supplement the pressure variable to simulate a negative pressure. Then step **314** modifies the appearance of the selected object in response to stylus tilt and/or pressure.

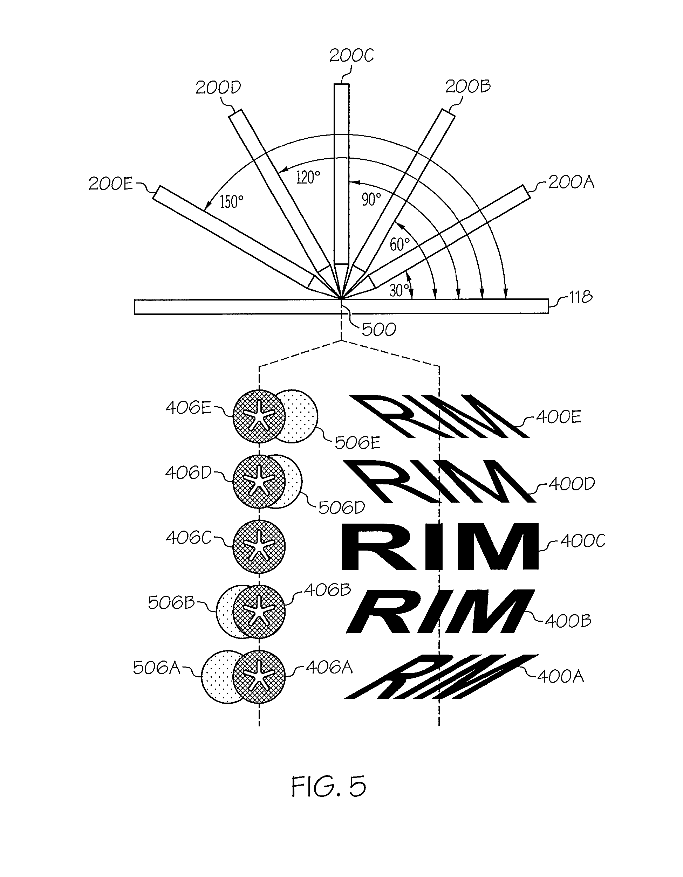

FIG. 5 shows two examples of object modification in response to stylus tilt. The stylus makes contact with the touch-sensitive display **118** at location **500.** The stylus is shown with five different stylus tilt angles. Stylus **200A** shows a 30 degree stylus tilt angle. Stylus **200B** shows a 60 degree stylus tilt angle. Stylus **200C** shows a 90 degree stylus tilt angle. Stylus **200D** shows a 120 degree stylus tilt angle. Stylus **200E** shows a 150 degree stylus tilt angle.

If stylus location **500** of FIG. 5 corresponds to the rendered location of object **400** of FIG. 4, and if the object slope "I" tool **414** is selected, then the appearance of object **400** is modified as shown where the object slope is modified in response to stylus tilt. When the stylus **200C** is perpendicular to the touch-sensitive display **118** object **400C** has no slope appearance, the characters appear perpendicular. As the stylus tilt is increased to the left at stylus **200D** and then stylus **200E,** the slope of the object correspondingly increases to the left at object **400D** and then object **400E.** As the stylus tilt is increased to right at stylus **200B** and then stylus **200A,** the slope of the object correspondingly increases to the right at object **400B** and then object **400A.**

If stylus location **500** of FIG. 5 corresponds to the rendered location of object **406** of FIG. 4, and if tool **418** is selected, then the appearance of object **406** is modified as shown where the location of a shadow background image relative to a foreground image is modified in response to stylus tilt. With the shadow tool, the object becomes a foreground image **406A-406E** and the appearance of the object is modified with the addition of a background image **506A-506E** that appears as a shadow of the foreground image where the location of background image is modified in response to the stylus tilt of the stylus. When the stylus **200C** is perpendicular to the touch-sensitive display **118,** the appearance of object is shown as object **406C** with only a foreground image and no shadow image because the shadow image would appear obstructed by the foreground image. As the stylus tilt is increased to the left at stylus **200D** and then stylus **200E,** the location of the background image correspondingly increases to the right at background image **506D** and then background image **506E** relative to respective foreground image **406D** and foreground image **406E.** As the stylus tilt is increased to right at stylus **200B** and then stylus **200A,** the background image location correspondingly increases to the left at background image **506B** and then background image **506A** relative to respective foreground image **406B** and foreground image **406A.**

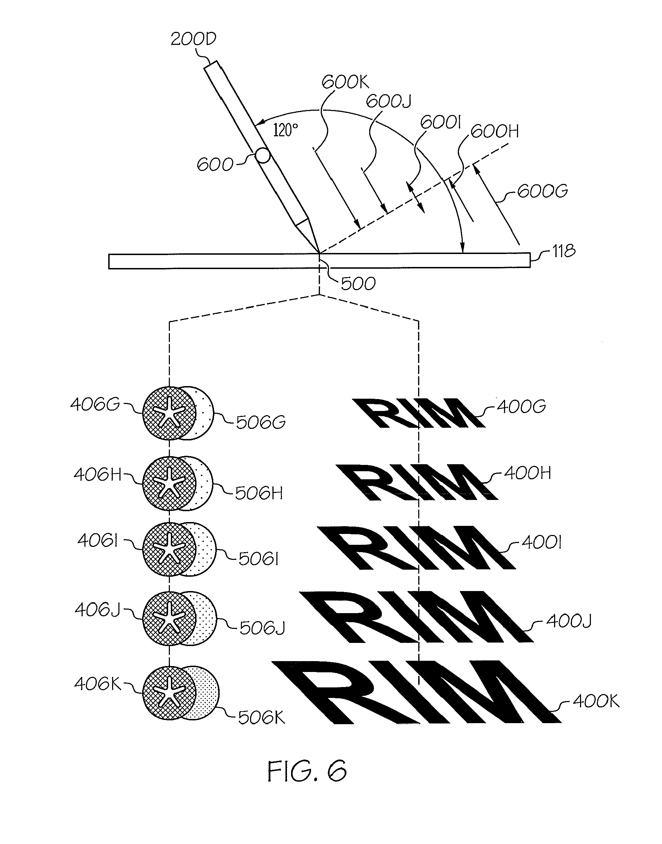

FIG. 6 shows two examples of object modification in response to stylus pressure. Stylus **200D** is shown contacting touch-sensitive display **118** at location **500** at a 120 degree tilt. Button **600** on the stylus is used to indicate a negative stylus pressure. Vector **600K** has a magnitude that indicates a large stylus contact pressure is being exerted by the user asserting a large force against location **500** with stylus **200D.** Vector **600G** has a similar magnitude to vector **600K** but in an opposite direction indicating a similar stylus contact pressure being asserted at vector **600K** but button **600** is pressed to indicate a negative stylus contact pressure. Vector **600J** has a lesser positive magnitude than vector **600K** and vector **600H** has a lesser negative magnitude than vector **600G.** The positive magnitudes of vectors **600J** and **600K** indicate that button **600** is not being pressed during the assertion of stylus contact pressure and the negative magnitudes of vectors **600H** and **600G** indicate that button **600** is being pressed during the assertion of stylus contact pressure. Vector **600I** indicates a small magnitude of either positive or negative pressure being asserted by the stylus **200D.**

If stylus location **500** of FIG. 6 corresponds to the rendered location of object **400** of FIG. 4, and if object size "A" tool **422** is selected, then the appearance of object **400** is modified as shown, where the object size is modified in response to stylus contact pressure. When the stylus contact pressure magnitude is small on the touch-sensitive display **118,** as shown by vector **600I,** the appearance of object is shown at object **400I** as having a size corresponding to object **400D** of FIG. 5. As the stylus contact pressure is increased in a positive magnitude at vector **600J** and then vector **600K,** the size of the object correspondingly increases at object **400J** and then object **400K.** As the stylus contact pressure is increased in a negative magnitude at vector **600H** and then vector **600G,** the size of the object correspondingly decreases at object **400H** and then object **400G.**

If stylus location **500** of FIG. 6 corresponds to the rendered location of object **406** of FIG. 4, and object shadow "S" tool **418** is selected, the stylus **200D** has a 120 degree tilt and the stylus contact pressure is varied, then the appearance of object **406** is modified as shown where the darkness of the background image is modified in response to stylus contact pressure. When the stylus contact pressure magnitude is small on the touch-sensitive display **118,** as shown by vector **600I,** the appearance of object **406** has a foreground image **406I** and a background image **506I.** The foreground image **406I** remains unchanged from foreground image **406D** and the darkness of background image **506I** remains unchanged from background image **506D.** As the stylus contact pressure is increased in a positive magnitude at vector **600J** and then vector **600K,** the darkness of the background image correspondingly increases at background image **506J** and then background **506K,** while foreground image **406J** and foreground image **406K** remain unchanged. As the stylus contact pressure is increased in a negative magnitude at vector **600H** and then vector **600G,** the darkness of the background image correspondingly decreases at background image **506H** and then background **506G,** while foreground image **406H** and foreground image **406G** remain unchanged.

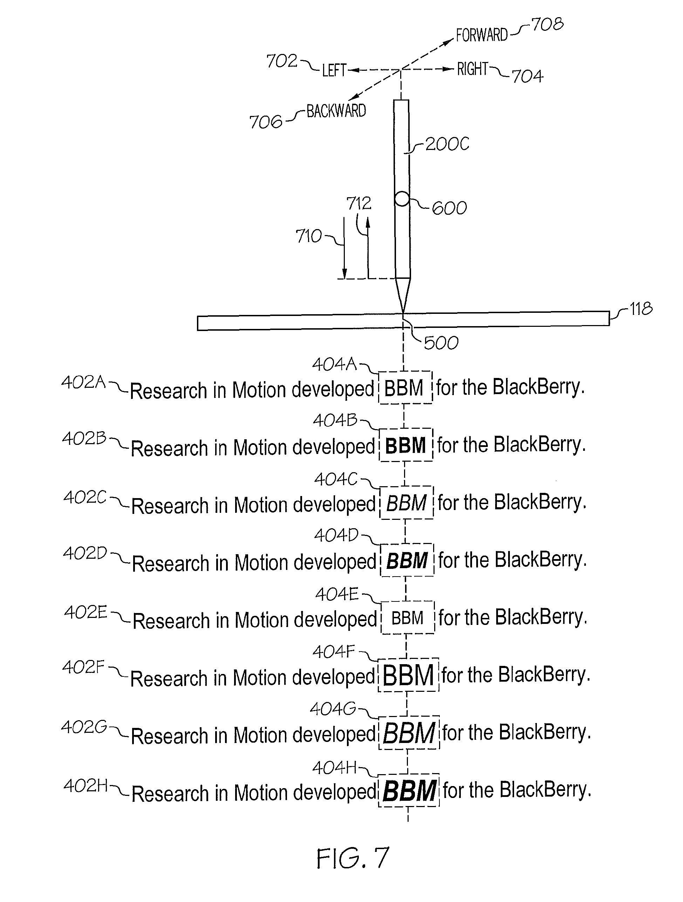

FIG. 7 shows multiple examples of object modification in response to stylus tilt and stylus pressure. Stylus **200C** is perpendicular to touch-sensitive display **118** and is making contact at location **500.** The stylus may have a left tilt **702,** a stylus right tilt **704,** a stylus backward tilt **706** and a stylus forward tilt **708.** The stylus may also assert a positive stylus contact pressure **710** when button **600** is not pressed and a negative stylus contact pressure **712** when button **600** is pressed.

If stylus location **500** of FIG. 7 corresponds to the rendered location of object **404** occurring within object **402** of FIG. 4 and no stylus tilt or significant pressure were present, then the appearance would be as shown at object **402A** and object **404A,** the letter "BBM" appearing unmodified from object **402** and object **404** of FIG. 4.

If the character weight "B" tool **412** was selected and a positive stylus contact pressure **710** asserted on object **404A** then the appearance would be as shown at object **402B** and object **404B** with object **404B** having a greater character weight, or the appearance of a "bold" font characteristic for the letters "BBM".

If the character weight "B" tool **412** was selected and a negative stylus contact pressure **712** asserted on object **404B** then the appearance would be as shown at object **402A** and object **404A** with object **404A** having a reduced character weight from the appearance of a "bold" font characteristic of object **404B.**

If the object slope "I" tool **414** was selected and a stylus right tilt **704** asserted on object **404A** then the appearance would be as shown at object **402C** and object **404C** with object **404C** having a greater right slope, or the appearance of an "italics" font characteristic for the letter "BBM".

If the both the character weight "B" tool **412** and the object slope "I" tool **414** were selected and both a positive stylus contact pressure **710** and a stylus right tilt **704** were simultaneously asserted on object **404A** then the appearance would be as shown at object **402D** and object **404D** with object **404D** having a greater character weight and a right slope, or the appearance of a "bold" and an "italics" font characteristic on the letters "BBM". Thus, two object appearance characteristics are modified with a single stylus action.

If the object size "A" tool **422** was selected and a stylus backward tilt **706** asserted on object **404A** then the appearance would be as shown at object **402E** and object **404E** with object **404E** having a reduced size font characteristic on the letters "BBM".

If the object size "A" tool **422** was selected and a stylus forward tilt **708** asserted on object **404A** then the appearance would be as shown at object **402F** and object **404F** with object **404F** having an increased size font characteristic on the letters "BBM".
If both the object size "A" tool **422** and the object slope "I" tool **414** were selected and both a stylus forward tilt **708** and a stylus right tilt **704** were simultaneously asserted on object **404A** then the appearance would be as shown at object **402G** and object **404G** with object **404G** having an increased size and a right slope font characteristic on the letters "BBM". Thus, two object appearance characteristics are modified with a single stylus action. This shows that object appearance includes first appearance characteristic, object size, and a second appearance characteristic, object slope. A first stylus tilt is determined in a first direction, the forward direction, and a second stylus tilt is determined in a second direction orthogonal to the first direction, the right direction. The first appearance characteristic is modified in response to the first stylus tilt and the second appearance characteristic is modified in response to the second stylus tilt.

If the object size "A" tool **422,** the object slope "I" tool **414** and the character weight "B" tool **412** were selected and a stylus forward tilt **708,** a stylus right tilt **704** and a positive stylus contact pressure **712** were simultaneously asserted on object **404A** then the appearance would be as shown at object **402H** and object **404H** with object **404H** having an increased size, a right slope and a greater weight font characteristic on the letters "BBM". In this example, three object appearance characteristics are modified with a single stylus action.

Thus, the appearance of an object may be modified in response to stylus tilt and stylus pressure. It will be appreciated that while a few examples of object modification have been shown using stylus tilt and stylus pressure, numerous other types of object appearance modification (not shown) are anticipated with this convenient and efficient approach. It will further be appreciated that the magnitude of the modification to the object appearance may be varied in response to the magnitude of the stylus tilt and the magnitude of the stylus pressure.

The terms "a" or "an", as used herein, are defined as one as or more than one. The term "plurality", as used herein, is defined as two as or more than two. The term "another", as used herein, is defined as at least a second or more. The terms "including" and "having," as used herein, are defined as comprising (i.e., open language). The term "coupled," as used herein, is defined as "connected," although not necessarily directly, and not necessarily mechanically. "Communicatively coupled" refers to coupling of components such that these components are able to communicate with one another through, for example, wired, wireless or other communications media. The term "communicatively coupled" or "communicatively coupling" includes, but is not limited to, communicating electronic control signals by which one element may direct or control another. The term "configured to" describes hardware, software or a combination of hardware and software that is adapted to, set up, arranged, commanded, altered, modified, built, composed, constructed, designed, or that has any combination of these characteristics to carry out a given function. The term "adapted to" describes hardware, software or a combination of hardware and software that is capable of, able to accommodate, to make, or that is suitable to carry out a given function.

The terms "controller", "computer", "server", "client", "computer system", "computing system", "personal computing system", or "processing system" describe examples of a suitably configured processing system adapted to implement one or more embodiments of the present disclosure. Any suitably configured processing system is similarly able to be used by embodiments of the present disclosure, for example and not for limitation, a personal computer, a laptop computer, a tablet computer, a personal digital assistant, a workstation, or the like. A processing system may include one or more processing systems or processors. A processing system can be realized in a centralized fashion in one processing system or in a distributed fashion where different elements are spread across several interconnected processing systems.

The terms "computing system", "computer system", and "personal computing system", describe a processing system that includes a user interface and which is suitably configured and adapted to implement one or more embodiments of the present disclosure. The terms "network", "computer network", "computing network", and "communication network", describe examples of a collection of computers and devices interconnected by communications channels that facilitate communications among users and allows users to share resources.

The term "electronic device" is intended to broadly cover many different types of electronic devices used by persons, and that include a user interface that can interoperate with a user. For example, and not for any limitation, an electronic device can include any one or a combination of the following: a two-way radio, a cellular telephone, a mobile phone, a smartphone, a two-way pager, a wireless messaging device, a personal computer, a laptop personal computer, a tablet computer, a gaming unit, a personal digital assistant, and other similar electronic devices.

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method for modifying an object rendered on a touch-sensitive display in response to a stylus input comprising:
determining a contact location (302) of the stylus (200) upon the touch-sensitive display;
determining a location of a selected object of a plurality of objects (400, 402, 404, 406, 408) rendered on the touch-sensitive display to correspond to the contact location;
determining a stylus tilt (310) relative to the touch-sensitive display; and
modifying an at least one appearance characteristic of the selected object (314) in response to the stylus tilt.

2. The method according to claim 1 wherein the selected object includes a text string (404A) and the at least one appearance characteristic includes at least one font characteristic and the modifying includes modifying the at least one font characteristic in response to the stylus tilt.

3. The method according to claim 2 where the at least one font characteristic includes slope (404C), size (404E) and weight (404B).

4. The method according to claim 1, 2 or 3 wherein the at least one appearance characteristic includes a first appearance characteristic and a second appearance characteristic, and the determining the stylus tilt determines a first stylus tilt in a first direction (702, 704), and a second stylus tilt in a second direction orthogonal to the first direction (706, 708) and the modifying includes modifying the first appearance characteristic in response to the first stylus tilt and modifying the second appearance characteristic in response to the second stylus tilt.

5. The method according to claim 1, 2, 3, or 4 wherein the first appearance characteristic includes object size and the second appearance characteristic includes object slope and the modifying includes modifying the object size in response to the first stylus tilt and modifying the object slope in response to the second stylus tilt.

6. The method according to claim 1 wherein the at least one appearance characteristic includes a foreground image (406) and a background image (506), the background image having a background image location relative to the foreground image and said step of modifying modifies the background image location of the background image relative to the foreground image in response to the stylus tilt.

7. The method according to claim 1, 2, 3, 4, 5, or 6 wherein
the determining the contact location of the stylus upon the touch-sensitive display includes determining a stylus contact pressure (312),
the modifying further modifies the at least one appearance characteristic of the object in response to the contact pressure, and
the background image has a darkness that is varied in response to the contact pressure, and the foreground image is not modified in response to the contact pressure.

8. The method according to claim 1, 2, 3, 4, 5, 6, or 7 wherein a computer readable medium comprises computer instructions executable on at least one processing unit of an apparatus for modifying the appearance of the selected object on the apparatus for implementing the method of claim 1.

9. A method for modifying an object rendered on a touch-sensitive display in response to a stylus input comprising:
determining a contact location (302) of the stylus (200) upon the touch-sensitive display;
determining a location of a selected object of a plurality of objects (400, 402, 404, 406, 408) rendered on the touch-sensitive display to correspond to the contact location;
determining a stylus contact pressure (312) of the stylus making contact with the touch-sensitive display; and
modifying an at least one appearance characteristic of the selected object (314) in response to the stylus contact pressure.

10. An apparatus for modifying an appearance of an object rendered on the apparatus comprising:
a display (114) for rendering a plurality of objects;
a stylus sensor (112) for determining a contact location of a stylus (200) upon the display;
a user interface module (147) for rendering each of the plurality of objects in a corresponding plurality of locations on the display and for determining a location of a selected object of the plurality of objects, the location of the selected object corresponding to the contact location;
the stylus sensor further for determining a stylus tilt of the stylus relative to the display; and
the user interface module further for modifying an at least one appearance characteristic of the selected object in response to the stylus tilt.

11. The apparatus according to claim 10 wherein
the at least one appearance characteristic includes a first appearance characteristic and a second appearance characteristic,
the stylus sensor determines a first stylus tilt in a first direction and a second stylus tilt in a second direction orthogonal to the first direction, and
the user interface module modifies the first appearance characteristic in response to the first stylus tilt and the second appearance characteristic in response to the second stylus tilt.

12. The apparatus according to claim 10 or 11 wherein
the stylus sensor determines a stylus contact pressure, and
the at least one appearance characteristic includes a first appearance characteristic and another appearance characteristic, and
the user interface module modifies the first appearance characteristic in response to the stylus tilt and the other appearance characteristic in response to the stylus contact pressure.

13. The apparatus according to claim 10, 11, or 12 wherein
the apparatus is a multiple component potable device including a first component having
a processor (102), memory (110) and programs (146) for operating processes of the apparatus including at least portions of the user interface module,
a communication subsystem (104) for communicating with a network, the display, and
the stylus sensor for receiving signals from the stylus, and
further including a second component detachably removable from the first component, the second component including the stylus, the stylus including
at least one button (206) for interfacing with the user interface module,
a controller (204) for controlling operation of the stylus, and
an RF module (208) for transmitting signals from the stylus to the stylus sensor.

14. The apparatus according to claim 10 wherein the selected object includes a text string (404) and the at least one appearance characteristic includes an at least one font characteristic and the user interface module modifies the at least one font characteristic in response to the stylus tilt.

15. The apparatus according to claim 10 wherein the object includes a foreground image (406) and a background image (506) and the user interface module modifies the background image relative to the foreground image in response to the stylus tilt.
